# FASCICULE DE BREVET EUROPEEN

(11) **EP 3 313 716 B1**
(45) Date de publication et mention de la délivrance du brevet: **29.01.2020**
(21) Numéro de dépôt: 16731223.0
(22) Date de dépôt: 23.05.2016
(51) Int. Cl.: B62D 43/10

(54) **DISPOSITIF DE FIXATION DESTINÉ À ÊTRE MONTÉ DANS UNE CUVETTE, TYPIQUEMENT DE ROUE DE SECOURS, D'UN PLANCHER, NOTAMMENT ARRIÈRE, DE VÉHICULE AUTOMOBILE**
BEFESTIGUNGSVORRICHTUNG ZUM EINBAU IN EINER VERTIEFUNG, TYPISCHERWEISE EINEM ERSATZRADHAUS, IN EINEM BODEN, TYPISCHERWEISE IM HECK EINES KRAFTFAHRZEUGS
SECURING DEVICE INTENDED TO BE FITTED IN A WELL, TYPICALLY A SPARE WHEEL WELL, IN A FLOOR, TYPICALLY AT THE REAR, OF A MOTOR VEHICLE

(30) Priorité: 23.06.2015 FR 1555738
(43) Date de publication de la demande: 02.05.2018
(73) Titulaire: RENAULT s.a.s., 92100 Boulogne-Billancourt (FR)
(72) Inventeur: DUONG, Olivier, 95610 Eragny Sur Oise (FR); VINIAL, Christophe, 91220 Le Plessis Pate (FR)
(86) Numéro de dépôt international: PCT/FR2016/051216
(87) Numéro de publication internationale: WO 2016/207503

(56) Documents cités:
- WO-A1-2014/131967
- JP-A- 2001 018 859
- JP-A- 2013 256 151
- US-A1- 2015 014 610

## Description

### Domaine technique de l'invention

L'invention concerne le domaine de l'automobile et plus particulièrement de la fixation d'objets dans un véhicule automobile.

L'invention a pour objet plus particulièrement un dispositif de fixation destiné à être monté au fond d'une cuvette, typiquement pour roue de secours, d'un plancher, notamment arrière, de véhicule automobile, ledit dispositif de fixation comprenant des bras de fixation permettant le montage dudit dispositif de fixation audit fond de la cuvette, et une partie centrale à partir de laquelle s'étendent lesdits bras de fixation.

### État de la technique

Un véhicule automobile est généralement équipé d'un plancher, notamment arrière, muni d'une cuvette. La cuvette peut avoir comme fonction la réception d'au moins un objet tel une roue de secours, une boîte à outils (cric, clé, etc.), un kit de gonflage et/ou de réparation d'un pneu, etc.

Pour stocker l'objet et éviter que celui-ci ne bouge dans la cuvette, il est connu d'équiper le plancher d'un dispositif de fixation. Par exemple, de façon connue, une roue de secours est solidarisée au plancher dans la cuvette par une platine à partir de laquelle s'étend un corps allongé traversant l'axe de rotation de la roue de secours, et venant réaliser une fixation positive par l'utilisation d'une tête coopérant avec le corps allongé pour solliciter la roue de secours contre la platine. C'est en particulier ce que divulgue le document FR3000010.

Dans un souci d'économies, on a cherché à développer des systèmes dits « universels », c'est-à-dire permettant la fixation d'objets différents à partir d'une même base.

Le document FR2990678 propose l'utilisation d'un dispositif de fixation à quatre bras muni d'une platine centrale permettant d'accoupler soit un cric soit une platine conventionnelle de réception d'une roue de secours.

Cette solution utilise des moyens de clipsage difficiles à fabriquer.

Le document JP 2001 018859 présent également un dispositif de fixation à bras fixés sur le plancher d'un véhicule automobile.

En ce sens, il résulte un besoin de développer un nouveau produit permettant de fixer aisément différents objets dans la cuvette dans plancher de véhicule automobile.

### Objet de l'invention

Le but de la présente invention est de proposer une solution permettant de faciliter la fixation d'objets dans une cuvette de plancher de véhicule automobile.

On tend vers ce but notamment en ce que l'agencement pour véhicule automobile comprenant un plancher de véhicule automobile en matériau composite muni d'une cuvette, comporte un dispositif de fixation monté au niveau du fond de la cuvette, ledit dispositif de fixation comprenant des bras de fixation permettant le montage dudit dispositif de fixation audit fond de la cuvette, et une partie centrale à partir de laquelle s'étendent lesdits bras de fixation, le dispositif de fixation comportant un écrou muni d'un trou taraudé monté sur la partie centrale, et en ce que la partie centrale comporte une ouverture agencée de telle sorte à autoriser le passage d'un élément fileté pour qu'il vienne se visser dans le trou taraudé, le dispositif de fixation comportant trois bras de fixation, et en ce que la cuvette comporte des nervures délimitant des empreintes de réception de deux parties de deux bras de fixation pour assurer un positionnement adéquat du dispositif de fixation dans le fond de la cuvette.

Notamment, l'écrou est monté sur une face de la partie centrale orientée vers le fond de la cuvette lorsque ledit dispositif est dans une configuration de montage à la cuvette.

Selon une réalisation, le dispositif de fixation comporte seulement trois bras de fixation.

Notamment, l'écrou est fixé à la partie centrale par soudage.

Avantageusement, la partie centrale forme une coupelle dont le fond comporte l'ouverture, la partie centrale comportant un rebord de coupelle à partir duquel s'étendent les bras de fixation, chaque bras de fixation comportant une première partie 13a formée dans le prolongement d'un bord de la coupelle et une deuxième partie formant un angle α avec la première partie, notamment de telle sorte que les deuxièmes parties des bras de fixation soient incluses dans un même plan, ou dans trois plans distincts mais sensiblement parallèles entre eux

En particulier, la cuvette est dimensionnée pour recevoir une roue de secours du véhicule automobile.

Selon une mise en œuvre particulière de l'agencement, ce dernier comporte une configuration dans laquelle :
- une roue de secours est placée dans la cuvette et un organe comprenant un élément fileté coopère avec l'écrou pour fixer ladite roue de secours au dispositif de fixation, ou
- un bac de réception d'un kit de gonflage pour le véhicule automobile est monté sur le dispositif de fixation et solidarisé audit dispositif de fixation par un organe comprenant un élément fileté coopérant avec l'écrou et traversant une ouverture du bac de réception, ou
- une roue de secours est placée dans la cuvette et un organe comprenant un élément fileté coopère avec l'écrou pour fixer ladite roue de secours au dispositif de fixation, ledit élément fileté étant fixé à un caisson de basse ou un bac à outils.

L'invention est aussi relative à un véhicule automobile comportant un agencement tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de fixation selon un mode de réalisation particulier de l'invention,
- la figure 2 est une vue en coupe du dispositif de fixation selon la ligne de coupe C1 de la figure 1,
- la figure 3 illustre un agencement pour véhicule automobile comprenant le dispositif de fixation selon la figure 1 monté au fond d'une cuvette,
- la figure 4 illustre une vue éclatée des éléments suivants : cuvette de plancher, dispositif de fixation et vis permettant le montage du dispositif de fixation au fond de la cuvette,
- la figure 5 est une vue centrée sur le fond de la cuvette où est monté le dispositif de fixation selon la figure 1,
- les figures 6 à 9 illustrent différentes configuration de stockage d'objet(s) dans la cuvette par fixation audit dispositif de fixation.

### Description de modes préférentiels de l'invention

Le dispositif de fixation décrit ci après diffère de l'art antérieur en ce qu'il comporte un écrou judicieusement placé permettant le vissage d'un élément fileté dans le but de fixer un objet audit dispositif de fixation.

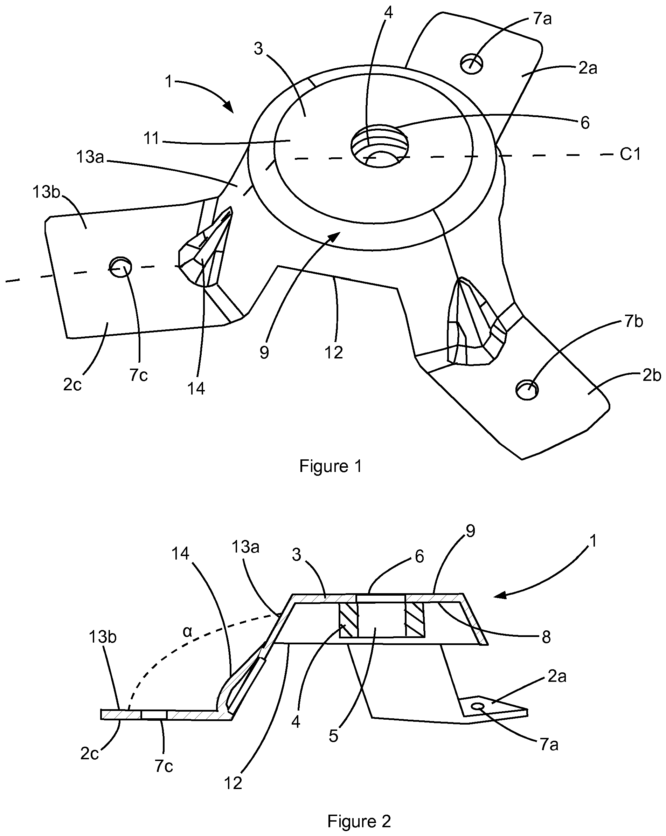

Comme l'illustrent les figures 1 et 2, le dispositif de fixation 1 est destiné à être monté au fond d'une cuvette, typiquement pour roue de secours, d'un plancher de véhicule automobile. Dans l'exemple illustré ce plancher est situé à l'arrière du véhicule. Ce dispositif de fixation 1 comprend des bras de fixation 2a, 2b, 2c permettant le montage dudit dispositif de fixation 1 audit fond de la cuvette. Le dispositif de fixation 1 comporte en outre une partie centrale 3 à partir de laquelle s'étendent lesdits bras de fixation 2a, 2b, 2c. En outre, le dispositif de fixation 1 comporte un écrou 4 muni d'un trou taraudé 5 monté sur la partie centrale 3, et la partie centrale 3 comporte une ouverture 6 agencée de telle sorte à autoriser le passage d'un élément fileté pour qu'il vienne se visser dans le trou taraudé 5.

Notamment, l'écrou 4 est fixé à la partie centrale 3 par soudage.

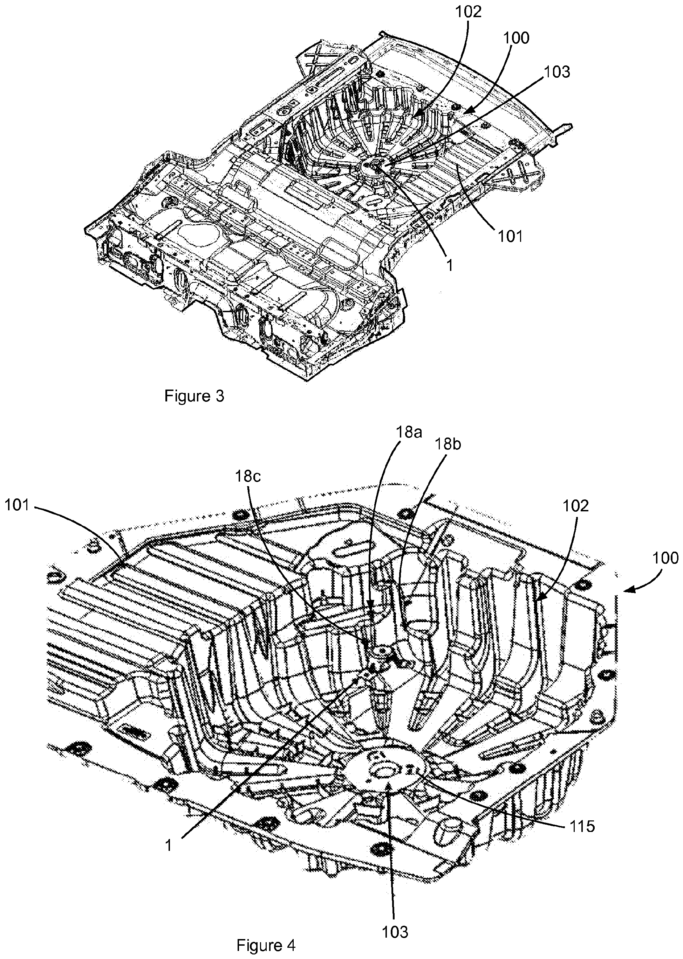

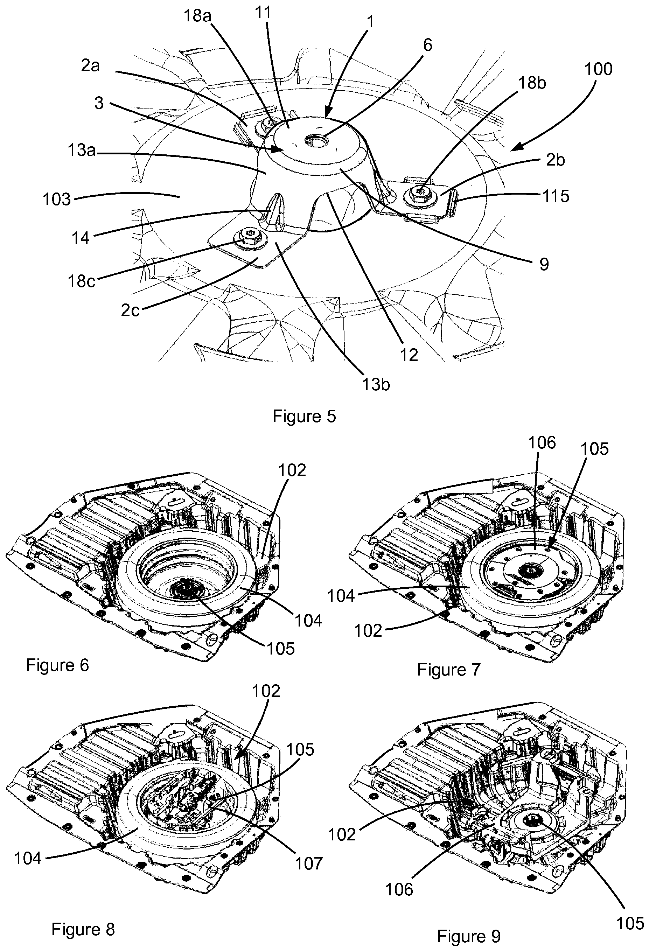

Les bras de fixation 2a, 2b, 2c sont destinés au montage du dispositif de fixation au fond de la cuvette et sont préférentiellement angulairement et régulièrement répartis autour de la partie centrale 3. Dans l'exemple illustré, trois bras de fixation s'étendent radialement depuis la partie centrale 3 en formant entre eux un angle de 120°. Chaque bras comporte une partie sensiblement verticale ou redressée à proximité du moyeu central, qui se termine par une patte de fixation appliquée à plat contre une surface d'appui située dans le fond de la cuvette. Cette surface d'appui correspond au fond 103 de la cuvette. Chacun des bras comporte une ouverture 7a, 7b, 7c autorisant le passage d'une vis 18a, 18b, 18c (figures 5 et 4), par exemple destinée à se visser dans l'épaisseur du plancher.

Les figures 3 à 5 illustrent un agencement 100 pour véhicule automobile comprenant un plancher 101, notamment arrière, de véhicule automobile muni d'une cuvette 102, typiquement pour roue de secours. Cet agencement 100 comporte le dispositif de fixation 1 tel que décrit monté au niveau du fond 103 de la cuvette 102.

La cuvette 102 de plancher permet de stocker des objets dans le plancher. Préférentiellement, la cuvette 102 est dimensionnée pour recevoir une roue de secours du véhicule automobile. Bien entendu, ce dimensionnement autorise le stockage d'autres objets comme nous le verrons par la suite.

De manière avantageuse, le dispositif de fixation 1 comporte seulement trois bras de fixation 2a, 2b, 2c. La limitation à trois bras par rapport à l'art antérieur permet un isostatisme parfait du dispositif de fixation 1 dans le fond de la cuvette. Autrement dit, la présence de ces trois bras de fixation 2a, 2b, 2c permet avantageusement à un même dispositif de fixation de s'adapter à des planchers de différents types de véhicule ou de différentes formes.

De manière générale, on comprend que le dispositif de fixation 1 décrit dans la présente description propose une pièce unique pour tout type de plancher de véhicule automobile à cuvette. Ceci permet notamment de diminuer les coûts en limitant le nombre de pièces à concevoir pour les véhicules automobiles.

De manière préférée, le dispositif de fixation est formé par seulement deux pièces. Une première pièce forme la partie centrale 3 et les bras de fixation à partir d'une tôle emboutie et la deuxième partie forme l'écrou 4.

Selon une réalisation, l'écrou 4 est monté sur une face 8 (figure 2) de la partie centrale 3 orientée vers le fond 103 de la cuvette 102 lorsque ledit dispositif de fixation est dans une configuration de montage à la cuvette 102. Cette disposition particulière permet au dispositif de fixation de présenter une surface d'appui par exemple destinée à former un support de l'objet à fixer au niveau du dispositif de fixation à l'opposé de la face 8.

Préférentiellement, comme illustré aux figures 1, 2, 5 la partie centrale 3 peut être formée par une coupelle dont le fond comporte l'ouverture 6. La partie centrale 3 est donc conformée pour qu'une de ses faces 8 (figure 2) soit une face concave. C'est dans le fond de cette face concave 8 que l'ouverture 6 est formée et que l'écrou 4 est fixé. Par ailleurs, à l'opposé de la face concave 8, le dispositif de fixation 1 comporte une face convexe 9, notamment de forme complémentaire à la forme de la face concave 8 du fait d'une épaisseur sensiblement constante de la partie centrale 3, comportant notamment la surface d'appui 11 préférentiellement plane. Comme évoqué précédemment, la surface d'appui 11 est destinée à former un support de l'objet à fixer. La partie centrale 3 comporte un rebord de coupelle 12 à partir duquel s'étendent les bras de fixation 2a, 2b, 2c. Chaque bras de fixation 2a, 2b, 2c comporte préférentiellement une première partie 13a formée dans le prolongement du bord de la coupelle et une deuxième partie 13b formant un angle α (figure 2) avec la première partie 13a, notamment de telle sorte que les deuxièmes parties 13b des, notamment trois, bras de fixation 2a, 2b, 2c soient incluses dans un même plan, ou dans trois plans distincts mais sensiblement parallèles entre eux. Dans l'exemple illustré, les deuxièmes parties 13b sont inscrites dans un même plan correspondant au fond 103 de la cuvette, ce plan étant sensiblement parallèle au plan de la partie centrale 3. La partie centrale 3 a une forme générale circulaire qui est située à un point haut par rapport aux deuxièmes parties 13b qui sont situées à un point bas. Le terme point signifie ici niveau ou hauteur, mesuré verticalement. Les deuxièmes parties 13b ont la forme générale de pattes de fixation qui sont appliquées à plat sur le fond 103 de la cuvette. Les ouvertures 7a, 7b, 7c sont conformées au centre de ces deuxièmes parties 13b ou pattes de fixation.

Notamment, chaque bras de fixation 2a, 2b, 2c comporte un renfort 14 obtenu par exemple par emboutissage (figures 1, 2 et 5). Le renfort 14 peut correspondre à un enfoncement local du bras de fixation 2a, 2b, 2c correspondant, notamment localisé à l'interface entre les première et deuxième parties 13a, 13b dudit bras de fixation correspondant. Cet enfoncement est conformé de façon à présenter une face concave vers l'intérieur ou la zone centrale du dispositif de fixation 1 et une face convexe vers l'extérieur du dispositif de fixation 1. Cet enfoncement agit de façon similaire à une nervure de rigidification. Ce renfort 14 a pour but d'éviter les déformations dudit bras de fixation correspondant.

Selon l'invention permettant de faciliter l'assemblage du dispositif de fixation à la cuvette 102, cette dernière comporte (figures 4 et 5) des nervures 115 délimitant des empreintes de réception de deux parties de deux bras de fixation pour assurer un positionnement adéquat du dispositif de fixation 1 dans le fond de la cuvette 102. Dans cette réalisation, le dispositif de fixation 1 comporte préférentiellement trois bras de fixation 2a, 2b, 2c. Sur la figure 5, chaque bras de fixation d'un couple de deux bras de fixation est associé à trois nervures permettant un positionnement adéquat du dispositif de fixation avant vissage de ce dernier au plancher. Un tel positionnement permet d'avoir une seule position du dispositif de fixation en fonction des besoins d'architecture de chaque véhicule. En outre, les nervures 115 permettent aussi d'éviter la mise en rotation du dispositif de fixation autour un axe déterminé par l'axe du trou 5 de l'écrou 4, ce qui aurait pour conséquence d'appliquer des efforts risquant d'endommager l'interface entre les vis 18a, 18b, 18c permettant le montage du dispositif de fixation 1 au fond 103 de la cuvette 102.

Une fois que le dispositif de fixation 1 est monté au fond de la cuvette 102, il permet de fixer des objets que l'on souhaite disposer dans la cuvette 102 en utilisant le trou taraudé 5 de l'écrou 4.

Les figures 6 à 9 illustrent différentes utilisation du dispositif de fixation pour fixer des objets dans la cuvette 102. Par exemple, l'agencement peut comporter une configuration dans laquelle :
- une roue de secours 104 est placée dans la cuvette 102 et un organe 105 comprenant un élément fileté (par exemple une tige filetée) coopère avec l'écrou pour fixer ladite roue de secours 104 au dispositif de fixation 1 (figure 6), notamment une tête de l'organe 105 vient solliciter une partie de la roue de secours destinée à entourer un moyeu du véhicule automobile contre la surface d'appui du dispositif de fixation, ou
- un bac de réception 106 (figure 9) d'un kit de gonflage (non représenté) pour le véhicule automobile est monté sur le dispositif de fixation et solidarisé audit dispositif de fixation par un organe 105 comprenant un élément fileté (par exemple une tige filetée) coopérant avec l'écrou et traversant une ouverture du bac de réception, notamment de telle sorte qu'une tête de l'organe 105 vienne solliciter le bac de réception 106 contre la surface d'appui du dispositif de fixation, ou
- une roue de secours 104 (figures 7 et 8) est placée dans la cuvette 102 et un organe 105 comprenant un élément fileté (par exemple une tige filetée) coopère avec l'écrou du dispositif de fixation pour fixer ladite roue de secours 104 audit dispositif de fixation, ledit élément fileté étant fixé à un caisson de basse 106 (figure 7) appartenant par exemple à l'organe 105, ou un bac à outils 107 (figure 8) appartenant par exemple à l'organe 105. Le bac à outils peut par exemple contenir un cric.

De préférence, le plancher 101 visé dans la description et comprenant la cuvette 102 est du type plancher à cuvette en composite (ou SMC de l'anglais « Sheet Molding Compound »). L'avantage d'un tel plancher formé en matériau composite est qu'il permet de réduire le poids par rapport à un plancher tôle. De plus, avec un tel plancher composite, il y a des possibilités d'y intégrer des formes complexes et des fixations diverses (écrans thermiques, crénage, bouclier, accessoires divers, etc.)

L'invention est bien entendu aussi relative à un véhicule automobile comportant un agencement tel que décrit.

## Revendications

1. Agencement (100) pour véhicule automobile comprenant un plancher (101) de véhicule automobile en matériau composite muni d'une cuvette (102), l'agencement comportant un dispositif de fixation (1) monté au niveau du fond (103) de la cuvette (102), ledit dispositif de fixation comprenant des bras de fixation (2a, 2b, 2c) permettant le montage dudit dispositif de fixation audit fond de la cuvette, et une partie centrale (3) à partir de laquelle s'étendent lesdits bras de fixation (2a, 2b, 2c), le dispositif de fixation comportant un écrou (4) muni d'un trou taraudé (5) monté sur la partie centrale (3), la partie centrale (3) comportant une ouverture (6) agencée de telle sorte à autoriser le passage d'un élément fileté pour qu'il vienne se visser dans le trou taraudé (5), le dispositif de fixation (1) comportant trois bras de fixation (2a, 2b, 2c), **caractérisé en ce que** la cuvette (102) comporte des nervures (115) délimitant des empreintes de réception de deux parties de deux bras de fixation (2a, 2b) pour assurer un positionnement adéquat du dispositif de fixation (1) dans le fond de la cuvette (2).

2. Agencement selon la revendication précédente, **caractérisé en ce que** l'écrou (4) est monté sur une face (8) de la partie centrale (3) orientée vers le fond de la cuvette (102) lorsque ledit dispositif est dans une configuration de montage à la cuvette (102).

3. Agencement selon l'une quelconque des revendications précédentes, **caractérisé en ce qu'**il comporte seulement trois bras de fixation (2a, 2b, 2c).

4. Agencement selon l'une quelconque des revendications précédentes, **caractérisé en ce que** l'écrou (4) est fixé à la partie centrale (3) par soudage.

5. Agencement selon l'une quelconque des revendications précédentes, **caractérisé en ce que** la partie centrale (3) forme une coupelle dont le fond comporte l'ouverture (6), la partie centrale (3) comportant un rebord de coupelle (12) à partir duquel s'étendent les bras de fixation (2a, 2b, 2c), chaque bras de fixation (2a, 2b, 2c) comportant une première partie 13a formée dans le prolongement d'un bord de la coupelle et une deuxième partie (13b) formant un angle α avec la première partie 13a, notamment de telle sorte que les deuxièmes parties (13b) des bras de fixation (2a, 2b, 2c) soient incluses dans un même plan, ou dans trois plans distincts mais sensiblement parallèles entre eux

6. Agencement selon l'une quelconque des revendications précédentes, **caractérisé en ce que** la cuvette (102) est dimensionnée pour recevoir une roue de secours (104) du véhicule automobile.

7. Agencement selon l'une des revendications précédentes, **caractérisé en ce qu'**il comporte une configuration dans laquelle :
- une roue de secours (104) est placée dans la cuvette (102) et un organe (105) comprenant un élément fileté coopère avec l'écrou pour fixer ladite roue de secours (104) au dispositif de fixation (1), ou
- un bac de réception (106) d'un kit de gonflage pour le véhicule automobile est monté sur le dispositif de fixation (1) et solidarisé audit dispositif de fixation (1) par un organe (105) comprenant un élément fileté coopérant avec l'écrou (4) et traversant une ouverture du bac de réception, ou
- une roue de secours (104) est placée dans la cuvette (102) et un organe (105) comprenant un élément fileté coopère avec l'écrou (4) pour fixer ladite roue de secours (104) au dispositif de fixation (1), ledit élément fileté étant fixé à un caisson de basse (106) ou un bac à outils (107).

8. Véhicule automobile, **caractérisé en ce qu'**il comporte un agencement selon l'une des revendications précédentes.

## Patentansprüche

1. Anordnung (100) für ein Kraftfahrzeug, die einen Kraftfahrzeugboden (101) aus Verbundmaterial enthält, der mit einer Mulde (102) versehen ist, wobei die Anordnung eine Befestigungsvorrichtung (1) aufweist, die im Bereich des Bodens (103) der Mulde (102) montiert ist, wobei die Befestigungsvorrichtung Befestigungsarme (2a, 2b, 2c), die die Montage der Befestigungsvorrichtung am Boden der Mulde erlauben, und einen zentralen Bereich (3) enthält, von dem ausgehend sich die Befestigungsarme (2a, 2b, 2c) erstrecken, wobei die Befestigungsvorrichtung eine mit einem Gewindeloch (5) versehene Mutter (4) aufweist, die auf den zentralen Bereich (3) montiert ist, wobei der zentrale Bereich (3) eine Öffnung (6) aufweist, die so ausgebildet ist, dass sie den Durchgang eines Gewindeelements erlaubt, damit es sich in das Gewindeloch (5) schraubt, wobei die Befestigungsvorrichtung (1) drei Befestigungsarme (2a, 2b, 2c) aufweist, **dadurch gekennzeichnet, dass** die Mulde (102) Rippen (115) aufweist, die Aufnahmevertiefungen von zwei Bereichen von zwei Befestigungsarmen (2a, 2b) begrenzen, um eine geeignete Positionierung der Befestigungsvorrichtung (1) im Boden der Mulde (2) zu gewährleisten.

2. Anordnung nach dem vorhergehenden Anspruch, **dadurch gekennzeichnet, dass** die Mutter (4) auf eine Seite (8) des zentralen Bereichs (3) montiert ist, die zum Boden der Mulde (102) gerichtet ist, wenn die Vorrichtung in einer Konfiguration der Montage in die Mulde (102) ist.

3. Anordnung nach einem der vorhergehenden Ansprüche, **dadurch gekennzeichnet, dass** sie nur drei Befestigungsarme (2a, 2b, 2c) aufweist.

4. Anordnung nach einem der vorhergehenden Ansprüche, **dadurch gekennzeichnet, dass** die Mutter (4) durch Schweißen am zentralen Bereich (3) befestigt ist.

5. Anordnung nach einem der vorhergehenden Ansprüche, **dadurch gekennzeichnet, dass** der zentrale Bereich (3) eine Schale formt, deren Boden die Öffnung (6) aufweist, wobei der zentrale Bereich (3) eine Schalenrandleiste (12) aufweist, von der ausgehend sich die Befestigungsarme (2a, 2b, 2c) erstrecken, wobei jeder Befestigungsarme (2a, 2b, 2c) einen ersten Bereich (13a), der in der Verlängerung eines Rands der Schale geformt ist, und einen zweiten Bereich (13b) aufweist, der mit dem ersten Bereich (13a) einen Winkel α bildet, insbesondere derart, dass die zweiten Bereiche (13b) der Befestigungsarme (2a, 2b, 2c) in der gleichen Ebene oder in drei unterschiedlichen Ebenen, aber im Wesentlichen parallel zueinander liegen.

6. Anordnung nach einem der vorhergehenden Ansprüche, **dadurch gekennzeichnet, dass** die Mulde (102) bemessen ist, um ein Reserverad (104) des Kraftfahrzeugs aufzunehmen.

7. Anordnung nach einem der vorhergehenden Ansprüche, **dadurch gekennzeichnet, dass** sie eine Konfiguration aufweist, in der:
- ein Reserverad (104) in der Mulde (102) angeordnet ist und ein ein Gewindeelement enthaltendes Organ (105) mit der Mutter zusammenwirkt, um das Reserverad (104) an der Befestigungsvorrichtung (1) zu befestigen, oder
- ein Aufnahmebehälter (106) eines Aufpumpsatzes für das Kraftfahrzeug auf die Befestigungsvorrichtung (1) montiert und durch ein Organ (105) fest mit der Befestigungsvorrichtung (1) verbunden ist, das ein Gewindeelement enthält, das mit der Mutter (4) zusammenwirkt und eine Öffnung des Aufnahmebehälters durchquert, oder
- ein Reserverad (104) in der Mulde (102) angeordnet ist und ein ein Gewindeelement enthaltendes Organ (105) mit der Mutter (4) zusammenwirkt, um das Reserverad (104) an der Befestigungsvorrichtung (1) zu befestigen, wobei das Gewindeelement an einem Subwoofer (106) oder einem Werkzeugbehälter (107) befestigt ist.

8. Kraftfahrzeug, **dadurch gekennzeichnet, dass** es eine Anordnung nach einem der vorhergehenden Ansprüche aufweist.

## Claims

1. Layout (100) for a motor vehicle comprising a motor vehicle floor (101) made of composite material provided with a well (102), the layout comprising a securing device (1) fitted level with the bottom (103) of the well (102), said securing device comprising securing arms (2a, 2b, 2c) allowing the assembly of said securing device to said bottom of the well, and a central portion (3) from which said securing arms (2a, 2b, 2c) extend, the securing device comprising a nut (4) provided with a tapped hole (5) fitted on the central portion (3), the central portion (3) containing an opening (6) arranged in such a manner as to allow the passage of a threaded element so that it is screwed into the tapped hole (5), the securing device (1) comprising three securing arms (2a, 2b, 2c), **characterized in that** the well (102) comprises ribs (115) delimiting receiving cavities for two parts of two securing arms (2a, 2b), in order to ensure adequate positioning of the securing device (1) in the bottom of the well (2).

2. Layout according to the preceding claim, **characterized in that** the nut (4) is fitted onto a face (8) of the central portion (3) oriented towards the bottom of the well (102) when said device is in a configuration for assembly to the well (102).

3. Layout according to either of the preceding claims, **characterized in that** it comprises only three securing arms (2a, 2b, 2c).

4. Layout according to any of the preceding claims, **characterized in that** the nut (4) is secured to the central portion (3) by welding.

5. Layout according to any of the preceding claims, **characterized in that** the central portion (3) forms a well, the bottom of which comprises the opening (6), the central portion (3) comprising a well rim (12) from which the securing arms (2a, 2b, 2c) extend, each securing arm (2a, 2b, 2c) comprising a first part 13a formed in the extension of an edge of the well and a second part (13b) forming an angle α with the first part 13a, in particular in such a manner that the second parts (13b) of the securing arms (2a, 2b, 2c) are included in one and the same plane, or in three planes which are different but substantially parallel to one another.

6. Layout according to any of the preceding claims, **characterized in that** the well (102) is of such a size as to receive a spare wheel (104) belonging to the motor vehicle.

7. Layout according to one of the preceding claims, **characterized in that** it comprises a configuration in which:
- a spare wheel (104) is placed in the well (102) and a mechanism (105) comprising a threaded element cooperates with the nut to secure said spare wheel (104) to the securing device (1), or
- a receiving recess (106) for an inflation kit for the motor vehicle is mounted on the securing device (1) and attached to said securing device (1) by a mechanism (105) comprising a threaded element cooperating with the nut (4) and crossing an opening in the receiving recess, or
- a spare wheel (104) is placed in the well (102) and a mechanism (105) comprising a threaded element cooperates with the nut (4) to secure said spare wheel (104) to the securing device (1), said threaded element being secured to a low chamber (106) or a tool recess (107).

8. Motor vehicle, **characterized in that** it comprises a layout according to one of the preceding claims.
